# EUROPÄISCHE PATENTSCHRIFT

(11) **EP 1 131 670 B1**
(45) Veröffentlichungstag und Bekanntmachung des Hinweises auf die Patenterteilung: **28.05.2008**
(21) Anmeldenummer: 99955902.4
(22) Anmeldetag: 29.10.1999
(51) Int. Cl.: G02F 1/1347, G01J 9/00

(54) **ELEKTROOPTISCHER LICHTMODULATOR**
ELECTROOPTICAL LIGHT MODULATOR
MODULATEUR DE LUMIERE ELECTRO-OPTIQUE

(30) Priorität: 17.11.1998 DE 19852890
(43) Veröffentlichungstag der Anmeldung: 12.09.2001
(73) Patentinhaber: Deutsche Telekom AG, 53113 Bonn (DE)
(72) Erfinder: DULTZ, Wolfgang, D-65936 Frankfurt am Main (DE); BERESNEV, Leonid, Columbia, MD 21044 (US); HAASE, Wolfgang, D-64354 Reinheim (DE); ONOKHOV, Arkady, St.Petersburg, 198097 (RU)
(74) Vertreter: Katscher Habermann Patentanwälte
(86) Internationale Anmeldenummer: PCT/EP1999/008206
(87) Internationale Veröffentlichungsnummer: WO 2000/029901

(56) Entgegenhaltungen:
- EP-A- 0 459 306
- WO-A-94/25893
- US-A- 5 477 354
- BERESNEV L ET AL: "Ferroelectric liquid crystals: Development of materials and fast electrooptical elements for non-display applications" OPTICAL MATERIALS,NL,ELSEVIER SCIENCE PUBLISHERS B.V. AMSTERDAM, Bd. 9, Nr. 1-4, 1. Januar 1998 (1998-01-01), Seiten 201-211, XP004123025 ISSN: 0925-3467
- WAND M D ET AL: "An easily aligned deformable helix ferroelectric liquid crystal mixture and its use in devices" LIQUID CRYSTAL MATERIALS, DEVICES AND APPLICATIONS, SAN JOSE, CA, USA, 11-13 FEB. 1992, Bd. 1665, Seiten 176-183, XP000874189 Proceedings of the SPIE - The International Society for Optical Engineering, 1992, USA ISSN: 0277-786X
- LOVE .G.D: "Polarization Insensitive 127 Segment Liquid Crystal wavefront corrector " ADAPTIVE OPTICS OSA TECHNICAL DIGEST SERIES, - 1996 Seiten 288-290, XP000874813
- ESCHLER J ET AL: "Fast adaptive lens based on deformed helical ferroelectric liquid crystal" INTERNATIONAL FERROELECTRIC LIQUID CRYSTAL CONFERENCE (FLC 95), CAMBRIDGE, UK, 23-27 JULY 1995, Bd. 181, Nr. 1-4, Seiten 21-28, XP000874188 Ferroelectrics, 1996, Gordon & Breach, Switzerland ISSN: 0015-0193

## Beschreibung

Die Erfindung betrifft einen elektrisch ansteuerbaren Lichtmodulator mit hintereinander angeordneten Flüssigkristallschichten, die zwischen transparenten Platten mit einer die Moleküle der Flüssigkristalle ausrichtenden Oberflächenanisotropie und mit Elektroden zur Erzeugung eines elektrischen Feldes in den Flüssigkristallen eingeschlossen sind, wobei wenigstens zwei Schichten aus helikalen smektischen ferroelektrischen Flüssigkristallen, deren mittlere optische Anisotropie durch Einwirkung des elektrischen Feldes beeinflussbar ist, hintereinander im Strahlengang eines zu modulierenden Lichtstrahls angeordnet sind und wobei die Richtungen der schnellen bzw. langsamen Achsen der einzelnen Schichten gegeneinander derart verdreht sind, dass die Polarisation des Lichtstrahls vor und hinter dem Modulator gleich ist.

Derartige Modulatoren werden zur Phasenkorrektur von Licht in vielerlei optischen Einrichtungen benötigt. Insbesondere im Bereich der adaptiven Optiken werden in zunehmenden Maße Möglichkeiten gesucht, lokale Unschärfen in dem Objektbild eines Fernrohres oder einer Kamera, welche beispielsweise durch atmosphärische Effekte oder Wärmespannungen im Gerät entstehen, korrigieren zu können. Gerade in Verbindung mit schneller digitaler Bildverarbeitungstechnik ergeben sich Möglichkeiten, ein derart verzerrtes Bild noch während des Betrachtens zu korrigieren, indem das Bild von einem elektronisch ansteuerbaren Raster von optisch wirksamen Elementen korrigiert wird, welches in den Strahlengang des Objektbildes eingefügt ist. Damit lassen sich Aufnahme- und Beobachtungsgeräte denken, die auch bei starken Störungen ein scharfes Bild liefern.

Flüssigkristalle können aufgrund ihrer elektrooptischen Eigenschaften zur Steuerung der Phase einer durch sie hindurchtretenden Lichtwelle verwendet werden, indem der Brechungsindex einer Schicht aus Flüssigkristallen mittels eines elektrischen Feldes beeinflusst wird. Die wesentlichen elektrooptischen Effekte in Flüssigkristallen ändern sowohl die Doppelbrechung als auch die Orientierung der Indikatrix der Brechungsindizes des Flüssigkristalls. Für die meisten Anwendungen ist dies unerwünscht, denn neben der Phasenverschiebung ergibt sich aufgrund des anisotropen Charakters der Flüssigkristalle beim Durchtritt durch den Flüssigkristall auch eine Änderung der Polarisation. Deswegen kann mit derartigen Flüssigkristallen nur polarisiertes Licht behandelt werden. Wellenfrontänderungen durch Phasenverzögerung sollen aber für die oben genannten Anwendungen polarisationsunabhängig möglich sein.

Bei der Verwendung nematischer Flüssigkristalle ist es möglich, die Phase eines Lichtstrahls zu verändern, ohne dass die Polarisation des Lichts beeinflusst wird. Jedoch ist es auch hier notwendig, dass das Licht parallel zum Direktor der orientierten Flüssigkristallmoleküle linear polarisiert ist. Ferner ist die Reaktionsgeschwindigkeit derartiger Zellen zu gering für die Verwendung in bildverarbeitenden Einrichtungen.

Ferroelektrische Flüssigkristalle (FLC) können in einer hinreichend kurzen Operationszeit angesteuert werden. Die Anwendungsmöglichkeiten gewöhnlicher ferroelektrischer Flüssigkristalle sind aber wegen der geringen erreichbaren Phasenänderungen sehr eingeschränkt. Bei Zellendicken von 10 µm erreicht man gerade eine Phasenverschiebung von etwa 1/10 der Wellenlänge des sichtbaren Lichts. Es ist aber eine Phasenverschiebung von einer ganzen Wellenlänge oder mehr anzustreben, um damit alle notwendigen Phasenkorrekturen durchführen zu können.

In EP 0 309 774 wird eine Flüssigkristallzelle beschrieben, die den bei FLC auftretenden DHF-Effekt (Deformation der Helixstruktur im elektrischen Feld) zur kontinuierlichen Phasensteuerung und Graustufendarstellung benutzt. Die optische Phasensteuerung beruht auf einer starken Änderung des mittleren Brechungsindex des Flüssigkristalls durch ein angelegtes elektrisches Feld. Die Änderung der Doppelbrechung der deformierten Helixstruktur kann d(n) = 5% erreichen, die mittlere Brechungsanisotropie <dn> = 15%. Aufgrund der optischen Eigenschaftten der helikalen Struktur des dort verwendeten chiralen smektischen Flüssigkristalls im elektrischen Feld ist die Änderung der Doppelbrechung mit starken Orientierungsänderungen der mittleren optischen Indikatrix verknüpft. Das bedeutet, dass sich das Licht nach dem Durchlaufen des Flüssigkristalls in einem Polarisationszustand befindet, der stark vom Polarisationszustand im Eingang abhängt. Diese Abhängigkeit verbietet die Verwendung der beschriebenen Zelle für die geforderten Zwecke.

In Love, Restaino, Carreras, Loos, Morrison, Baur and Kopp: "Polarization Insensitive 127-Segment Liquid Crystal Wavefront Corrector", Adaptive Optics, Vol. 13, pp. 228-290, Optical Society of America, Washington D.C., 1996 wird ein elektrooptisch arbeitender Modulator zur Phasensteuerung von unpolarisiertem Licht vorgestellt, der zwei hintereinanderliegende Flüssigkristallschichten vom nematischen Typ enthält. In der angeführten Arbeit werden zwei nematische Schichten so angeordnet, dass die Direktoren der Flüssigkristalle im feldfreien Zustand senkrecht aufeinander stehen. Die Zelle ist aber, wie oben schon erwähnt wurde, viel zu langsam für den angestrebten Verwendungszweck.

Aus US 5,477,354 ist ein Lichtmodulator mit smektischen ferroelektrischen Flüssigkristallen bekannt geworden. Dieser Lichtmodulator ist jedoch nicht für eine kontinuierliche stufenlose Phasensteuerung geeignet. Dies wird durch eine aus WO 94/25893 A bekannte Flüssigkristallanordnung erzielt, von der die Erfindung ausgeht. Diese bekannte Anordnung ermöglicht jedoch nicht eine-Phasenmodulation ohne eine Änderung der Polarisation für alle Polarisationsrichtungen des einfallenden Lichts.

Aufgabe der vorliegenden Erfindung ist es, einen elektrisch ansteuerbaren Lichtmodulator anzugeben, der eine Schaltzeit in der Größenordnung von 10⁻⁴ Sekunden oder darunter bei einer maximalen Phasenverschiebung von über 2n aufweist, der die Phase eines beliebig polarisierten Lichtstrahls stufenlos verändern kann, ohne dessen Polarisationszustand zu ändern, und der zur Erstellung ortsauflösender adaptiver optischer Einrichtungen geeignet, das heißt klein, leicht und verlustarm ist.

Diese Aufgabe wird erfindungsgemäß dadurch gelöst, dass die schnelle und langsame optische Achse parallel zu der jeweiligen Schicht liegen.

Die "langsame" Achse entspricht dabei derjenigen Richtung, in welcher der Brechungsindex am größten ist. Die "schnelle" Achse ist diejenige Richtung, in welcher der Brechungsindex am kleinsten ist. Das heißt, dass die Phase eines in der langsamen Richtung polarisierten Lichtstrahls stark verzögert wird und die Phase eines in der schnellen Richtung polarisierten Lichtstrahls weniger stark. Durch die Anisotropie der Brechungsindizes kommt es damit bei beliebig polarisiertem Licht zu einer Änderung des Polarisationszustandes beim Durchlaufen der Flüssigkristallschichten. Die Verdrehung der einzelnen Schichten zueinander ist gerade so bemessen, dass die angesprochene Änderung des Polarisationszustandes in den folgenden Schichten wieder rückgängig gemacht wird.

Im einfachsten Fall wird der Lichtmodulator so ausgestaltet, dass zwei Flüssigkristallschichten derart hintereinander Aufgabe der vorliegenden Erfindung ist es, einen elektrisch ansteuerbaren Lichtmodulator anzugeben, der eine Schaltzeit in der Größenordnung von 10⁻⁴ Sekunden oder darunter bei einer maximalen Phasenverschiebung von über 2n aufweist, der die Phase eines beliebig polarisierten Lichtstrahls stufenlos verändern kann, ohne dessen Polarisationszustand zu ändern, und der zur Erstellung ortsauflösender adaptiver optischer Einrichtungen geeignet, das heißt klein, leicht und verlustarm ist.

Diese Aufgabe wird erfindungsgemäß dadurch gelöst, daß die wenigstens zwei Schichten aus helikalen smektischen ferroelektrischen Flüssigkristallen bestehen, deren schnelle und langsame optische Achse parallel zu der jeweiligen Schicht liegen, und daß die Richtungen der schnellen bzw. langsamen Achsen der einzelnen Schichten gegeneinander derart verdreht sind, daß die Polarisation des Lichtstrahls vor und hinter dem Modulator gleich ist.

Die "langsame" Achse entspricht dabei derjenigen Richtung, in welcher der Brechungsindex am größten ist. Die "schnelle" Achse ist diejenige Richtung, in welcher der Brechungsindex am kleinsten ist. Das heißt, daß die Phase eines in der langsamen Richtung polarisierten Lichtstrahls stark verzögert wird und die Phase eines in der schnellen Richtung polarisierten Lichtstrahls weniger stark. Durch die Anisotropie der Brechungsindizes kommt es damit bei beliebig polarisiertem Licht zu einer Änderung des Polarisationszustandes beim Durchlaufen der Flüssigkristallschichten. Die Verdrehung der einzelnen Schichten zueinander ist gerade so bemessen, daß die angesprochene Änderung des Polarisationszustandes in den folgenden Schichten wieder rückgängig gemacht wird.

Im einfachsten Fall wird der Lichtmodulator so ausgestaltet, daß zwei Flüssigkristallschichten derart hintereinander angeordnet sind, daß die langsame optische Achse der ersten Schicht senkrecht auf der langsamen optischen Achse der zweiten Schicht steht, daß die schnelle optische Achse der ersten Schicht senkrecht auf der schnellen optischen Achse der zweiten Schicht steht und daß die Ausrichtung der langsamen und der schnellen optischen Achsen der beiden Schichten zueinander während des Anlegens und Veränderns der Steuerspannung jederzeit erhalten bleibt.

Durch die Kreuzung der schnellen und langsamen Achsen der beiden Schichten im rechten Winkel werden die Doppelbrechungsänderungen und die Orientierungsänderungen der Indikatrixellipsoide der Brechungsindizes gerade kompensiert.

Es kann zur Reduzierung des Bauvolumens vorgesehen sein, daß die Flüssigkristallschichten zwischen zwei transparenten Platten eingeschlossen sind, an deren Elektroden eine Steuerspannung zur Erzeugung eines elektrischen Feldes anlegbar ist.

Um dagegen den Bauaufwand für den Lichtmodulator zu reduzieren und die Massenfertigung zu erleichtern, kann alternativ vorgesehen sein, daß die Flüssigkristallschichten jeweils zwischen zwei transparenten Platten eingeschlossen sind, an deren Elektroden je eine Steuerspannung zur Erzeugung je eines elektrisches Feldes anlegbar ist.

Zur Herstellung des erfindungsgemäßen Lichtmodulators wird die benötigte Anzahl der so gefertigten Einzelzellen hintereinander angeordnet.

Bei der Verwendung gleicher Schichtdicken und Materialien für die Schichten ist vorgesehen, daß die Flüssigkristallschichten die gleichen mittleren Brechungsindizes aufweisen, die gleiche Dicke haben und synchron mit den gleichen Steuerspannungen beaufschlagbar sind.

Bei der Verwendung unterschiedlicher Schichtdicken oder unterschiedlicher Materialien für die einzelnen Schichten ist dagegen vorgesehen, daß das Verhältnis der Steuerspannungen zueinander zur Kompensation der Polarisationsänderungen eines durchtretenden Lichtstrahls einstellbar ist. Dadurch läßt sich eine Überkreuzung der Hauptbrechungsrichtungen auch bei unsymmetrisch aufgebauten Zellen erreichen.

Die Fertigung von Flüssigkristallzellen ist sehr aufwendig; große Stückzahlen entsprechen nicht den Anforderungen an die Genauigkeit und müssen daher aussortiert und dem Produktionsprozeß erneut zugeführt werden. Zur Vereinfachung und Verbilligung der Produktion ist vorgesehen, daß die Steuerspannungen für die einzelnen Flüssigkristallschichten zur Kompensation von Fertigungstoleranzen abgleichbar sind.

Der erfindungsgemäße Lichtmodulator arbeitet mit einer smektischen Flüssigkristallmischung FLC-472/FLC-247 besonders gut im Bereich des sichtbaren Lichts, welche aus 60 gew% Phenyl-Pyrmidin und 40 gew% einer achiralen smektischen A- oder C-Matrix mit einer chiralen Dotierung auf der Basis von di-substituiertem Ether von Bis-Terphenyl-Di-Carboxilsäure besteht. Diese Dotierung induziert eine spontane Polarisation von etwa 160 nC/cm² in der Matrix mit einer Helixstruktur der Windungsperiode von etwa 0,3 µm in der chiralen smektischen Phase. Bereits eine Arbeitsspannung von 0 V bis 4 V verursacht einen smektischen Ablenkungswinkel von 0° bis ±22,5° bei einer Ansprechzeit von 150 µs. Die Modulationstiefe zwischen zwei gekreuzten Schichten beträgt damit bis zu 100%. Die Änderung des mittleren Brechungsindex beträgt bei der oben genannten Arbeitsspannung bereits bis zu 5%. Um eine Phasendifferenz von der Größenordnung der Wellenlänge des zu steuernden Lichts zu erhalten, genügt eine summierte Schichtdicke von 10 µm. Diese Schichtdicke ist die Summe der Dicken der Einzelschichten.

Bei der Verwendung von Kameras oder Fernrohren zur Beobachtung von Objekten innerhalb der Erdatmosphäre oder durch diese hindurch treten lokale Unschärfen in dem Objektbild auf, welche auf atmosphärische Störungen zurückzuführen sind. Zur Korrektur dieser lokalen Unschärfen wird eine adaptive optische Einrichtung vorgeschlagen, welche ein Feld von rasterartig angeordneten Lichtmodulatoren des durch die Erfindung offenbarten Typs enthält. Das Feld ist in dem Strahlengang der Einrichtung angeordnet, wobei jeder einzelne Lichtmodulator zur Kompensation punktuell auftretender Unschärfen eines zu verarbeitenden Bildes ansteuerbar ist.

Dabei kann zur Reduzierung des Bauaufwandes vorgesehen sein, daß die Lichtmodulatoren auf einer gemeinsamen Trägerschicht aufgebracht sind.

Die Einrichtung wird in den Strahlengang des betreffenden Beobachtungsgerätes, beispielsweise einer Kamera oder eines Fernrohres, eingesetzt. Das von dem Beobachtungsgerät aufgenommene Objektbild wird einer Bildauswerteeinrichtung zugeführt, welche die Unschärfen in dem Bild ermittelt und das Modulatorfeld zu deren Kompensation entsprechend ansteuert.

Ein Ausführungsbeispiel des erfindungsgemäßen Lichtmodulators ist in der Zeichnung anhand mehrerer Figuren dargestellt. Es zeigt:
Fig. 1 die Anordnung der Flüssigkristallzellen für den Modulator und
Fig. 2 ein schematisches Diagramm der Brechungsindexindikatrixen für verschiedene Betriebszustände.

Gleiche Teile sind in den Figuren mit gleichen Bezugszeichen versehen.

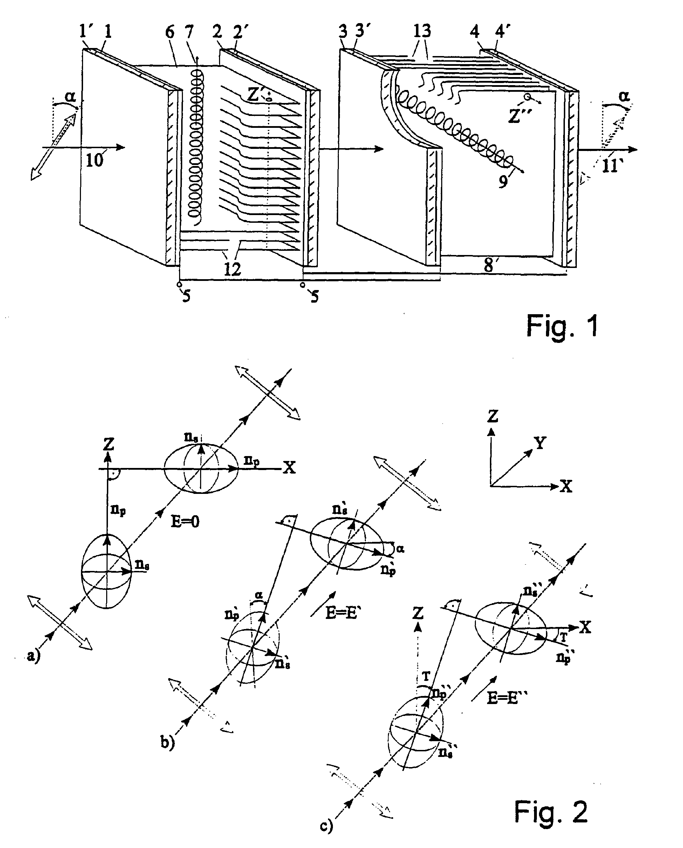

Fig. 1 zeigt die beiden hintereinander im Strahlengang eines zu modulierenden Lichtstrahls 10 angeordneten Flüssigkristallschichten 6 und 8. Die Polarisationsrichtung des einfallenden Lichtstrahls 10 und des ausfallenden Lichtstrahls 11 wird durch jeweils einen Doppelpfeil markiert. Im Beispiel ist die Polarisationsrichtung des einfallenden Lichtstrahls 10 um den Winkel α gegenüber der Senkrechten geneigt.

Die erste Flüssigkristallschicht 6 ist zwischen zwei transparenten Elektroden 1 und 2 angeordnet, die auf zwei transparente Platten 1' und 2' aufgebracht sind. Die smektischen Schichten 12 bilden Versetzungsdomänen, entlang derer sich die Moleküle des Flüssigkristalls anordnen. Die Moleküle des Flüssigkristalls sind von Schicht zu Schicht um einen Winkel verdreht, so daß sich die Struktur einer Helix ergibt, deren Achse 7 in Richtung der Normalen z' zu den smektischen Schichten 12 verläuft. Die zweite Flüssigkristallschicht 8 ist zwischen den transparenten Elektroden 3 und 4 angeordnet, die wiederum auf den transparenten Platten 3' und 4' aufgebracht sind. Die Normalenrichtung z" der smektischen Schichten 13 der zweiten Flüssigkristallschicht 8 und die Achse der Helix 9 sind um 90° gegenüber der Normalenrichtung z' und der Helixachse 7 der ersten Schicht 6 verdreht.

Zwei in dieser Weise gekreuzte Flüssigkristallschichten 6 und 8 verändern den Polarisationszustand eines durchgehenden Lichtstrahls 10 nicht. Die reine Phasenmodulation der beiden Flüssigkristallschichten wird duch den feldabhängigen mittleren Brechungsindex verursacht. Die Doppelbrechung und Orientierungseffekte der Indikatrix in den durch Anlegen einer Spannung an die Anschlüsse 5 erzeugten elektrischen Feldern werden bei allen Feldstärken kompensiert.

Fig. 2 zeigt die Auswirkungen eines elektrischen Feldes E verschiedener Stärke 0, E', E" auf die Brechungsindizes nₛ und nₚ der Flüssigkristallschichten 6 und 8. Die x- und z-Achse des dargestellten Koordinatensystems liegen parallel zu der Ebene der Flüssigkristallschichten. Die z-Achse liegt zudem parallel zu der Normalenrichtung z' des ersten Flüssigkristalls 6. Die y-Achse zeigt in die Ausbreitungsrichtung des einfallenden Lichtstrahls 10. In Abbildung a) liegt keine Spannung an. Die langsame Achse mit dem Brechungsindex nₚ der ersten Flüssigkristallschicht zeigt in Richtung der z-Achse, während die langsame Achse mit dem Brechungsindex nₚ der zweiten Flüssigkristallschicht senkrecht zur z-Achse orientiert ist. Der Polarisationszustand des einfallenden Lichts bleibt beim Durchgang durch beide Schichten 6 und 8 erhalten.

In Abbildung b) wird eine kleine Spannung angelegt, die unterhalb derjenigen Spannung liegt, bei der die Helixstruktur verschwindet. Die langsamen optischen Achsen mit den Brechungsindizes nₚ' sowie die schnellen Achsen mit den Brechungsindizes nₛ' der beiden Schichten 6 und 8 reorientieren sich und werden um den Winkel α verdreht. Die rechten Winkel zwischen den Achsen bleiben erhalten. Der Brechungsindex nₚ' steigt in den langsamen Achsen mit zunehmder Feldstärke E' an, während der Brechunsindex nₛ' in den schnellen Achsen abnimmt. Der optische Weg des durchgehenden Lichts wird mit der Feldstärke E' verändert und folglich verschiebt sich dessen Phase. Die größte optische Wegänderung findet bei einer Spannung statt, die kurz unterhalb derjenigen Spannung liegt, bei der die Helixstruktur des Flüssigkristalls verschwindet. Dieser Zustand ist in Abbildung c) dargestellt. In den nun nicht mehr aufgewundenen Flüssigkristallen ist das Indexellipsoid der Brechungsindizes durch die molekularen Brechungsindizes nₚ" und nₛ" charakterisiert. Die langsamen Achsen mit den Brechungsindizes nₚ" sind in den beiden Schichten 6 und 8 um den molekularen Neigungswinkel T gekippt, was dem Winkel zwischen den smektischen Schichten 12 und 13 und den Helixachsen 7 und 9 entspricht. Auch in diesem Fall bleiben die Achsen unter einem rechten Winkel gekreuzt. Die Phasenverzögerung ist also über den gesamten Betriebsbereich unabhängig von der Polarisation des Lichts. Somit ist auch die Steuerung unpolarisierten Lichts möglich.

## Patentansprüche

1. Elektrisch ansteuerbarer Lichtmodulator mit hintereinander angeordneten Flüssigkristallschichten, die zwischen transparenten Platten mit einer die Moleküle der Flüssigkristalle ausrichtenden Oberflächenanisotropie und mit Elektroden zur Erzeugung eines elektrischen Feldes in den Flüssigkristallen eingeschlossen sind, wobei wenigstens zwei Schichten (6, 8) aus helikalen smektischen ferroelektrischen Flüssigkristallen, deren mittlere optische Anisotropie durch Einwirkung des elektrischen Feldes (E) beeinflussbar ist, hintereinander im Strahlengang eines zu modulierenden Lichtstrahls (10) angeordnet sind und wobei die Richtungen der schnellen bzw. langsamen Achsen der einzelnen Schichten (6, 8) gegeneinander derart verdreht sind, dass die Polarisation des Lichtstrahls vor (10) und hinter (11) dem Modulator gleich ist, **dadurch gekennzeichnet, dass** die schnelle und langsame optische Achse parallel zu der jeweiligen Schicht (6, 8) liegen.

2. Lichtmodulator nach Anspruch 1, **dadurch gekennzeichnet, daß** zwei Flüssigkristallschichten (6, 8) derart hintereinander angeordnet sind, daß die langsame optische Achse der ersten Schicht (6) senkrecht auf der langsamen optischen Achse der zweiten Schicht (8) steht, daß die schnelle optische Achse der ersten Schicht (6) senkrecht auf der schnellen optischen Achse der zweiten Schicht (8) steht und daß die Ausrichtung der langsamen und der schnellen optischen Achsen der beiden Schichten (6, 8) zueinander während des Anlegens und Veränderns der Steuerspannung jederzeit erhalten bleibt.

3. Lichtmodulator nach einem der vorhergehenden Ansprüche, **dadurch gekennzeichnet, daß** die Flüssigkristallschichten zwischen zwei transparenten Platten eingeschlossen sind, an deren Elektroden eine Steuerspannung zur Erzeugung eines elektrischen Feldes anlegbar ist.

4. Lichtmodulator nach einem der Ansprüche 1 oder 2, **dadurch gekennzeichnet, daß** die Flüssigkristallschichten (6, 8) jeweils zwischen zwei transparenten Platten (1' und 2', 3' und 4') eingeschlossen sind, an deren Elektroden (1 und 2, 3 und 4) je eine Steuerspannung zur Erzeugung je eines elektrisches Feldes (E) anlegbar ist.

5. Lichtmodulator nach einem der vorhergehenden Ansprüche, **dadurch gekennzeichnet, daß** die Flüssigkristallschichten (6, 8) die gleichen mittleren Brechungsindizes aufweisen, die gleiche Dicke haben und synchron mit den gleichen Steuerspannungen beaufschlagbar sind.

6. Lichtmodulator nach Anspruch 4, **dadurch gekennzeichnet, daß** das Verhältnis der Steuerspannungen zueinander zur Kompensation der Polarisationsänderungen eines durchtretenden Lichtstrahles einstellbar ist.

7. Lichtmodulator nach einem der vorhergehenden Ansprüche, **dadurch gekennzeichnet, daß** die Steuerspannungen für die einzelnen Flüssigkristallschichten zur Kompensation von Fertigungstoleranzen abgleichbar sind.

8. Lichtmodulator nach einem der vorhergehenden Ansprüche, **dadurch gekennzeichnet, daß** die Flüssigkristallschichten aus einer smektischen Flüssigkristallmischung FLC-472/FLC-247 bestehen.

9. Lichtmodulator nach einem der vorhergehenden Ansprüche, **dadurch gekennzeichnet, daß** die Flüssigkristallmischung aus 60 gew% Phenyl-Pyrmidin und 40 gew% einer achiralen smektischen A-Matrix mit einer chiralen Dotierung auf der Basis von di-substituiertem Ether von Bis-Terphenyl-Di-Carboxilsäure besteht.

10. Lichtmodulator nach einem der Ansprüche 1 bis 8, **dadurch gekennzeichnet, daß** die Flüssigkristallmischung aus 60 gew% Phenyl-Pyrmidin und 40 gew% einer achiralen smektischen C-Matrix mit einer chiralen Dotierung auf der Basis von di-substituiertem Ether von Bis-Terphenyl-Di-Carboxilsäure besteht.

11. Adaptive optische Einrichtung, **gekennzeichnet durch** ein Feld von rasterartig angeordneten Lichtmodulatoren nach einem der vorhergehenden Ansprüche, welches in dem Strahlengang der Einrichtung angeordnet ist, wobei jeder einzelne Lichtmodulator zur Kompensation punktuell auftretender Unschärfen eines zu verarbeitenden Bildes ansteuerbar ist.

12. Adaptive optische Einrichtung nach Anspruch 11, **dadurch gekennzeichnet, daß** die Lichtmodulatoren auf einer gemeinsamen Trägerschicht aufgebracht sind.

13. Adaptive optische Einrichtung nach einem der Ansprüche 11 oder 12, **gekennzeichnet durch** die Anordnung vor dem Bildsensor einer Digitalkamera, wobei das von der Kamera aufgenommene Bild einer Bildauswerteeinrichtung zur Ermittlung punktueller Unschärfen des Bildes zuführbar ist und wobei die adaptive optische Einrichtung von der Bildauswerteeinrichtung zum Ausgleich der Unschärfen ansteuerbar ist.

14. Adaptive optische Einrichtung nach einem der Ansprüche 11 oder 12, **gekennzeichnet durch** die Anordnung in einer optischen Beobachtungseinrichtung, wobei das zu beobachtende Bild parallel einer Bildauswerteeinrichtung zur Ermittlung punktueller Unschärfen des Bildes zuführbar ist und wobei die adaptive optische Einrichtung von der Bildauswerteeinrichtung zum Ausgleich der Unschärfen ansteuerbar ist.

15. Adaptive optische Einrichtung nach einem der Ansprüche 11 oder 12, **gekennzeichnet durch** die Anordnung in einer Kamera, wobei das zu beobachtende Bild einer Bildauswerteeinrichtung zur Ermittlung punktueller Unschärfen des Bildes zuführbar ist und wobei die adaptive optische Einrichtung von der Bildauswerteeinrichtung zum Ausgleich der Unschärfen ansteuerbar ist.

## Claims

1. Electrically drivable light modulator with liquid crystal layers that are arranged one behind another and are enclosed between transparent plates having a surface anisotropy that orients the molecules of the liquid crystals and having electrodes for producing an electric field in the liquid crystals, wherein at least two layers (6, 8) of helical smectic ferroelectric liquid crystals, whose mean optical anisotropy can be influenced by the action of the electric field (E), are arranged one behind the other in the beam path of a light beam (10) that is to be modulated, and wherein the directions of the fast and slow axes of the individual layers (6, 8) are rotated relative to one another such that the polarization of the light beam before (10) and after (11) the modulator is the same, **characterized in that** the fast and slow optical axes are parallel to the respective layer (6, 8).

2. Light modulator according to claim 1, **characterized in that** two liquid crystal layers (6, 8) are arranged one behind another such that the slow optical axis of the first layer (6) is perpendicular to the slow optical axis of the second layer (8), such that the fast optical axis of the first layer (6) is perpendicular to the fast optical axis of the second layer (8), and such that the orientation of the slow and fast optical axes of the two layers (6, 8) relative to one another is maintained at all times during the application and changing of the control voltage.

3. Light modulator according to any one of the preceding claims, **characterized in that** the liquid crystal layers are enclosed between two transparent plates to the electrodes of which a control voltage can be applied to produce an electric field.

4. Light modulator according to one of claims 1 or 2, **characterized in that** the liquid crystal layers (6, 8) are each enclosed between two transparent plates (1' and 2', 3' and 4'), to the electrodes (1 and 2, 3 and 4) of which a control voltage can be applied in each case to produce one electric field (E) in each case.

5. Light modulator according to any one of the preceding claims, **characterized in that** the liquid crystal layers (6, 8) have the same mean refractive index, have the same thickness, and can have equal control voltages applied synchronously to them.

6. Light modulator according to claim 4, **characterized in that** the ratio of the control voltages to one another can be adjusted to compensate for the polarization changes in a light beam passing through.

7. Light modulator according to any one of the preceding claims, **characterized in that** the control voltages for the individual liquid crystal layers are trimmable to compensate for manufacturing tolerances.

8. Light modulator according to any one of the preceding claims, **characterized in that** the liquid crystal layers consist of a smectic liquid crystal mixture FLC-472/FLC-247.

9. Light modulator according to any one of the preceding claims, **characterized in that** the liquid crystal mixture consists of 60% phenylpyrimidine by weight and 40% of an achiral smectic A matrix by weight with a chiral doping based on disubstituted ether of bis-terphenyl dicarboxylic acid.

10. Light modulator according to any one of claims 1 through 8, **characterized in that** the liquid crystal mixture consists of 60% phenylpyrimidine by weight and 40% of an achiral smectic C matrix by weight with a chiral doping based on disubstituted ether of bis-terphenyl dicarboxylic acid.

11. Adaptive optical device, **characterized by** an array of light modulators according to any one of the preceding claims that is arranged in a grid and is located in the beam path of the device, wherein each individual light modulator is drivable in order to compensate for point-by-point blurring of an image to be processed.

12. Adaptive optical device according to claim 11, **characterized in that** the light modulators are mounted on a common substrate.

13. Adaptive optical device according to one of claims 11 or 12, **characterized by** arrangement in front of the image sensor of a digital camera, wherein the image recorded by the camera can be delivered to an image analysis device for detecting point-by-point blurring of the image, and wherein the adaptive optical device can be driven by the image analysis device to compensate for the blurring.

14. Adaptive optical device according to one of claims 11 or 12, **characterized by** arrangement in an optical observing device, wherein the image to be observed can be delivered in parallel to an image analysis device for detecting point-by-point blurring of the image, and wherein the adaptive optical device can be driven by the image analysis device to compensate for the blurring.

15. Adaptive optical device according to one of claims 11 or 12, **characterized by** arrangement in a camera, wherein the image to be observed can be delivered to an image analysis device for detecting point-by-point blurring of the image, and wherein the adaptive optical device can be driven by the image analysis device to compensate for the blurring.

## Revendications

1. Modulateur de lumière à commande électrique comportant des couches de cristaux liquides disposées les unes derrière les autres et enfermées entre des plaques transparentes en présence d'une anisotropie de surface orientant les molécules des cristaux liquides et d'électrodes destinées à générer un champ électrique dans les cristaux liquides, les au moins deux couches (6, 8) de cristaux liquides ferroélectriques hélicoïdaux smectiques, dont l'anisotropie optique moyenne est influençable par l'effet du champ électrique (E), étant disposées l'une derrière l'autre dans le trajet d'un faisceau lumineux (10) à moduler et les directions des axes rapides ou lents des différentes couches (6, 8) étant décalées l'une par rapport à l'autre de manière que la polarisation du faisceau lumineux est la même en amont (10) et en aval (11) du modulateur, **caractérisé en ce que** les axes optiques rapide et lent sont parallèles à la couche respective (6, 8).

2. Modulateur de lumière selon la revendication 1, **caractérisé en ce que** deux couches de cristaux liquides (6, 8) sont disposées l'une derrière l'autre de manière telle que l'axe optique lent de la première couche (6) soit placé verticalement sur l'axe optique lent de la deuxième couche (8), **en ce que** l'axe optique rapide de la première couche (6) soit placé verticalement sur l'axe optique rapide de la deuxième couche (8) et **en ce que** l'orientation des axes optiques rapides et lents des deux couches (6, 8) l'un par rapport à l'autre soit maintenue pendant toute la durée de l'application et de la variation de la tension de commande.

3. Modulateur de lumière selon l'une quelconque des revendications précédentes, **caractérisé en ce que** les couches de cristaux liquides sont enfermées entre deux plaques transparentes, une tension de commande étant applicable aux électrodes de celles-ci pour générer un champ électrique.

4. Modulateur de lumière selon l'une des revendications 1 ou 2, **caractérisé en ce que** les couches de cristaux liquides (6, 8) sont chacune enfermées entre deux plaques transparentes (1' et 2', 3' et 4'), une tension de commande étant respectivement applicable aux électrodes (1 et 2, 3 et 4) de celles-ci pour générer un champ électrique (E).

5. Modulateur de lumière selon l'une quelconque des revendications précédentes, **caractérisé en ce que** les couches de cristaux liquides (6, 8) présentent les mêmes indices de réfraction moyens, ont la même épaisseur et peuvent recevoir les mêmes tensions de commande de manière synchrone.

6. Modulateur de lumière selon la revendication 4, **caractérisé en ce que**, pour compenser les variations de polarisation d'un faisceau lumineux incident, le rapport des tensions de commande est réglable.

7. Modulateur de lumière selon l'une quelconque des revendications précédentes, **caractérisé en ce que**, pour compenser des tolérances de fabrication, les tensions de commande destinées aux différentes couches de cristaux liquides sont ajustables.

8. Modulateur de lumière selon l'une quelconque des revendications précédentes, **caractérisé en ce que** les couches de cristaux liquides consistent en un mélange de cristaux liquides smectique FLC-472/FLC-247.

9. Modulateur de lumière selon l'une quelconque des revendications précédentes, **caractérisé en ce que** le mélange de cristaux liquides est composé de 60 % en poids de phényl-pyrimidine et de 40 % en poids d'une matrice A smectique achirale à dopage chiral sur la base d'éther disubstitué d'acide dicarboxylique de bis-terphényle.

10. Modulateur de lumière selon l'une des revendications 1 à 8, **caractérisé en ce que** le mélange de cristaux liquides est composé de 60 % en poids de phényl-pyrimidine et de 40 % en poids d'une matrice C smectique achirale à dopage chiral sur la base d'éther disubstitué d'acide dicarboxylique de bis-terphényle.

11. Dispositif optique adaptatif **caractérisé par** un champ de modulateurs de lumière disposés en trame selon l'une des revendications précédentes, placé dans le trajet lumineux du dispositif, chacun des modulateurs de lumière pouvant être commandé individuellement pour compenser des manques de netteté d'une image à traiter apparaissant ponctuellement.

12. Dispositif optique adaptatif selon la revendication 11, **caractérisé en ce que** les modulateurs de lumière sont montés sur une couche support commune.

13. Dispositif optique adaptatif selon l'une des revendications 11 ou 12, **caractérisé par** la disposition d'une caméra numérique devant le capteur d'image, l'image prise par la caméra pouvant être communiquée à un dispositif d'analyse d'image pour détecter des manques de netteté ponctuels de l'image, et le dispositif optique adaptatif pouvant être commandé par le dispositif d'analyse d'image pour compenser les manques de netteté.

14. Dispositif optique adaptatif selon l'une des revendications 11 ou 12, **caractérisé par** la disposition dans un dispositif d'observation optique, l'image à observer pouvant être communiquée parallèlement à un dispositif d'analyse d'image pour détecter des manques de netteté ponctuels de l'image, et le dispositif optique adaptatif pouvant être commandé par le dispositif d'analyse d'image pour compenser les manques de netteté.

15. Dispositif optique adaptatif selon l'une des revendications 11 ou 12, **caractérisé par** la disposition dans une caméra, l'image à observer pouvant être communiquée à un dispositif d'analyse d'image pour détecter des manques de netteté ponctuels de l'image, et le dispositif optique adaptatif pouvant être commandé par le dispositif d'analyse d'image pour compenser les manques de netteté.
